Europäisches Patentamt

(19) European Patent Office

Office européen des brevets

(11) Publication number: **0 290 180 B1**

## (12) EUROPEAN PATENT SPECIFICATION

(45) Date of publication of patent specification :
07.08.91 Bulletin 91/32

(51) Int. Cl.$^5$: **A01F 15/14**

(21) Application number: **88303723.6**

(22) Date of filing: **26.04.88**

(54) Means and method for baling straw, hay and like materials.

(30) Priority: 29.04.87 GB 8710148

(43) Date of publication of application:
09.11.88 Bulletin 88/45

(45) Publication of the grant of the patent:
07.08.91 Bulletin 91/32

(84) Designated Contracting States:
AT BE CH DE ES FR GB GR IT LI LU NL SE

(56) References cited:
CA-A- 1 093 376
DE-B- 2 705 101
GB-A- 1 218 648
GB-A- 2 150 073

(73) Proprietor: BRIDON PLC
Carr Hill
Doncaster Yorkshire DN4 8DG (GB)

(72) Inventor: Yeardley, John Kenneth
42 Westmount Road,
London. SE 9 (GB)

(74) Representative: Woodin, Anthony John et al
Fitzpatricks Europe House Box No. 88 World
Trade Centre East Smithfield
London E1 9AA (GB)

## Description

This invention is concerned with a means and method for baling straw, hay and like materials.

For many years, baling machines have been used to produce rectangular bales which have been secured by twine disposed round them and thereafter knotted to prevent removal. More recently, baling machines were introduced which produce round (i.e. generally cylindrical) bales which have been secured by wrapping a single length of twine round them, and more recently still it was found that if a sufficient number of turns was used then the bale was secure without any need to knot the twine.

In these latter embodiments the baling machine (baler) collects the straw or other material and rolls it into a bale. When sufficient material has been collected, so that the bale is of the desired size, the baler must then pause while twine is applied to the bale. The time taken to apply the twine, and thus to secure the bale, may be substantial. In order to reduce this time some balers have been produced which use a net instead of twine to secure round bales. The net requires fewer laps round the bales, with consequent time saving, but the cost of the net is considerably more than that of twine.

The present invention seeks to provide a means and method which enable bales to be secured quickly and cheaply by twine, thus, with the cost-saving benefits of twine and with at least some of the time-saving benefits of netting.

A device for baling straw is disclosed in Canadian Patent No. 1093376, in which a plurality of lengths of twine are simultaneously applied to a bale. A disadvantage of this device, however, is that each twine-lengths is supplied from its own independent source. Consequently, even if only one of said bale lengths requires replacement, the device must stop operating while said length is replaced. This introduces a significant disadvantage, in that a substantial amount of operating time is lost due to twine replacement.

According to a first aspect of the invention, there is provided a baler twine package comprising a plurality of spooled lengths of twine mounted co-axially and side-by-side on a common carrier, whereby in use the ends of said twine can be withdrawn simultaneously from positions spaced apart along the carrier to wrap a bale.

Thus, a significant advantage of the present invention is that twine is replaced by replacing the complete carrier, thereby significantly reducing time lost for twine replacement.

The twine package can be made with overall dimensions similar to those of a roll netting, so that it can be fitted into the netting housing on the baler and used instead of netting. Typically the package will be around 1.2 m long and 15 cm in diameter.

The number of ends of twine may be varied depending on the size of the bale. However, preferably there are at least 4 ends (otherwise the bale may not be properly secured), but not more than 10 ends (otherwise each spool will be too short ; it is desirable for the spools to carry around 1.25 miles [2Km] of twine). Typically, there will be 6 or 8 ends, or one end per 6-8 in (15-20 cm).

It has been found that only three or four wraps of each end round the bale is necessary to make the bale secure without knotting (the ends of course being wrapped simultaneously), compared with either a conventional twine system which requires twelve to fourteen wraps or a net system which requires two to three wraps.

In one form of the invention, each end is wound on to its own hollow core, and the carrier comprises a spindle passing through the hollow cores. The hollow cores may be flanged (as in a cotton reel, for instance) or unflanged (simple tubular bobbins). They may be fixed to the spindle or (preferably) may be rotatable thereon. In any event, if on unflanged cores the spooled ends should desirably be mounted in tight side-by-side engagement (with the cores possibly glued together) to minimise the risk of the twine, during withdrawal, entering between the spools and becoming jammed.

In another arrangement, however, the ends may be wound directly on to the common carrier. In that case, to minimise the risk of the jamming of twine as mentioned above, the ends should either be wound in close engagement side-by-side, or — and preferably — the windings of adjoining ends of twine should overlap one another, layer by layer.

The twine used in the present invention may be any suitable such twine. That commonly used in the Art is the so-called "Raffia grade", comprising twisted and partly fibrillated polypropylene film about 2 mm in diameter. However, the twine may be in the form of flat polypropylene tape, which may become partly fibrillated in spooling and in use. Of course, other synthetic or natural materials may be used for the twine ; for example, the twine may be a biodegradeable synthetic material.

In its second aspect the invention provides a method of baling straw, hay and like materials which includes feeding wrapping material around a cylindrical bale to hold the bale together, in which method the wrapping material comprises a plurality of ends of twine which are fed simultaneously around the bale at positions spaced apart axially along the bale.

The following is a description, by way of example, of an embodiment of the invention, reference being made to the accompanying schematic drawings in which

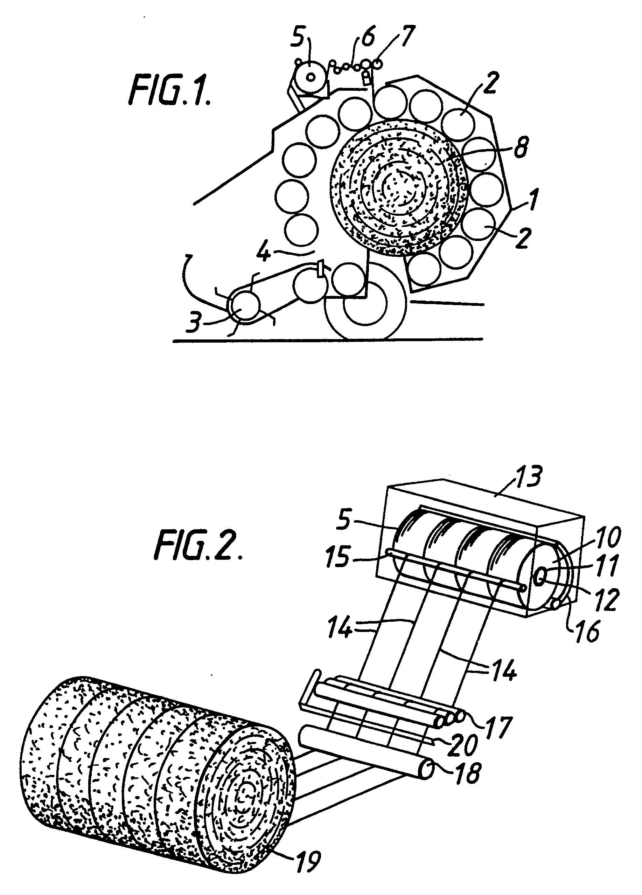

Figuré 1    shows a general view of a baler of the type with which the invention is concerned ; and·
Figure 2    shows a perspective, and diagrammatic, view of the inventive twine package being used to secure a bale.

The baler of Figure 1 is a power-driven wheel-mounted device having an outer cylindrical casing (1) within which are peripherally mounted a series of driven "rollers" (as 2) that "wind up" straw fed in by a tined roller (3) via opening (4).

Mounted atop the casing 1 is a multi-ended roll of twine (5) whose several ends (6) are fed via a series of powered rollers (as 7) into the interior of the casing — and, at the appropriate time, around the formed bale (8).

The details of the invention are more clearly seen in Figure 2. A baler twine package (5) comprises a plurality of spooled ends (14) of twine. Only four spools (10) are shown in the drawing, but in practice larger numbers (e.g. 6-8) of spools would usually be provided. The twine on each spool 10 is wound in conventional fashion on a hollow core (11), and the cores are slid on to a spindle (12) so that the spools 10 are in close side-by-side engagement. The package is disposed in a package holder (13) of a baler so that it can rotate thereon about the spindle axis, under the control of a package tensioner (16). The ends 14 of twine from the spools 10 pass over a guide bar (15) and then round feed rollers (17) to a spread roller (18). From the roller 18 the twine passes to the rotating bale (19 ; 8 in Figure 1), around which the ends are wound under tension. When the ends have been wrapped round the bale for the desired number of wraps, a cutter (20) severs the ends.

The baler is of commercially available form. However, as explained above, the present invention provides a novel form of wrapping package which can be used in such a baler with substantial advantages.

## Claims

1. A baler twine package comprising a plurality of spooled lengths of twine mounted co-axially and side-by-side on a common carrier whereby in use the end of said twine can be withdrawn simultaneously from positions spaced apart along the carrier to wrap a bale.

2. A baler twine package according to Claim 1, wherein each length of twine is wound on to its own hollow core, and the carrier comprises a spindle passing through said hollow cores.

3. A baler twine package according to Claim 2, wherein said hollow cores are rotatable on said spindle.

4. A baler twine package according to Claim 1, wherein the lengths of twine are wound directly on the common carrier.

5. A baler twine package according to Claim 4, wherein windings of adjoining lengths of twine overlap one another.

6. A method of baling straw, hay and like materials by feeding wrapping material around a cylindrical bale to hold the bale together, in which method the wrapping material comprises a plurality of lengths of twine which are fed simultaneously around the bale at positions spaced apart axially along the bale, characterised in that the wrapping material is fed from a baler twine package according to any of claims 1 to 5.

## Patentansprüche

1. Garnkörper mit Bindegarn für Ballen, umfassend mehrere aufgewickelte Längen von Bindegarn, die koaxial und nebeneinander auf einem gemeinsamen Träger befestigt sind, wodurch im Betrieb die Enden des Bindegarns gleichzeitig von entlang des Trägers voneinander beabstandeten Positionen abgezogen werden können, um einen Ballen zu umwickeln.

2. Garnkörper mit Bindegarn für Ballen nach Anspruch 1, worin jede Länge von Bindegarn auf ihren eigenen hohlen Kern gewickelt ist, und der Träger eine Spindel umfaßt, die durch die hohlen Kerne hindurchgeht.

3. Garnkörper mit Bindegarn für Ballen nach Anspruch 2, worin die hohlen Kerne auf der Spindel drehbar sind.

4. Garnkörper mit Bindegarn für Ballen nach Anspruch 1, worin die Längen von Bindegarn direkt auf den gemeinsamen Träger gewickelt sind.

5. Garnkörper mit Bindegarn für Ballen nach Anspruch 4, worin die Windungen benachbarter Längen von Bindegarn einander überlappen.

6. Verfahren zum Pressen von Stroh, Heu und ähnlichen Materialien durch Zuführen von Wickelmaterial um einen zylindrischen Ballen, um den Ballen zusammenzuhalten, in welchem Verfahren das Wickelmaterial mehrere·Längeń von Bindegarn umfaßt, die gleichzeitig um den Ballen an axial entlang des Ballens voneinander beabstandeten Positionen zugeführt werden, dadurch **gekennzeichnet,** daß das Wickelmaterial von einem Garnkörper mit Bindegarn für Ballen nach einem der Ansprüche 1 bis 5 zugeführt wird.

**Revendications**

1. Bloc de ficelles pour ramasseuse-presse comprenant plusieurs bobines de ficelles montées coaxialement et côte à côte sur un support commun, étant entendu qu'en service, les brins de ficelles peuvent être dévidés simultanément à partir d'endroits espacés le long du support pour cercler une balle.

2. Bloc de ficelles pour ramasseuse-presse suivant la revendication 1, dans lequel chaque brin de ficelle est envidé sur son propre mandrin creux et le support comprend un axe traversant les mandrins creux.

3. Bloc de ficelles pour ramasseuse-presse suivant la revendication 2, dans lequel les mandrins creux peuvent tourner sur l'axe.

4. Bloc de ficelles pour ramasseuse-presse suivant la revendication 1, dans lequel les brins de ficelles sont envidés directement sur le support commun.

5. Bloc de ficelles pour ramasseuse-presse suivant la revendication 4, dans lequel des spires de brins adjacents de ficelles se chevauchent mutuellement.

6. Procédé pour lier de la paille, du foin et des matières analogues en balles en débitant une matière de cerclage autour d'une balle cylindrique pour maintenir cette balle homogène, selon lequel la matière de cerclage comprend plusieurs brins de ficelles qui sont débités simultanément autour de la balle en des endroits espacés axialement l'un de l'autre le long de la balle, caractérisé en ce que la matière de cerclage est débitée à partir d'un bloc de ficelles pour ramasseuse-presse suivant l'une quelconque des revendications 1 à 5.

FIG.1.

FIG.2.